# EUROPEAN PATENT APPLICATION

(11) **EP 1 407 660 A1**
(43) Date of publication of application: **14.04.2004**
(21) Application number: 03256459.3
(22) Date of filing: 13.10.2003
(51) Int. Cl.: A01G 25/16

(54) **Irrigation system comprising sequentially activated sprinklers**

(30) Priority: 12.10.2002 GB 0223810
(71) Applicant: Henty, Paul, Knutsford, Cheshire WA16 8QL (GB)
(72) Inventor: Henty, Paul, Knutsford, Cheshire WA16 8QL (GB)
(74) Representative: Lyons, Andrew John

(57) **Abstract**

A water sprinkler (100) has an inlet (110) for receiving water, a sprinkler head (108) for discharging water, an outlet (112) for delivering water to a subsequent sprinkler and means (122, 107, 140) for bypassing delivery of water to the sprinkler head in favour of the outlet after a predetermined period of time. A water sprinkler system can include several such sprinklers.

## Description

The present invention relates to an improved sprinkler system.

Garden sprinklers are widely available for watering an area of land, such as a lawn. The sprinkler is attached to the end of a hosepipe and releases the water as a fine spray over the surrounding area. Sprinklers enable a larger area to be covered by water released from a hosepipe than would be the case if just the hosepipe were used. The sprinklers also prevent soaking of the area due to the water being delivered as a spray. The sprinkler may be left on for a period of time to provide adequate watering of the area. This removes the need for the gardener to stand holding a hosepipe over the area for the long period of time and to move around the garden to ensure that the entire area is supplied with sufficient water.

Different types of sprinklers that are in existence include rotating sprinklers that deliver water in a fixed pattern, sometimes with a variety of spray patterns, and oscillating sprinklers that deliver water from a row of spray jets provided along a bar that slowly oscillates to supply water in a square or rectangular pattern.

Whilst these types of sprinklers are satisfactory, particularly for watering small gardens, if the area to be watered is large, it may be necessary to move the sprinkler around to ensure that the entire area receives an adequate supply of water. It is possible to invest in a costly and sophisticated irrigation system but often a gardener will simply move a single sprinkler around the garden, requiring the sprinkler to be repeatedly switched on and off and moved. A possible solution would be to buy more than one sprinkler but this is not entirely satisfactory. Each time a sprinkler is added, an additional hosepipe is required, resulting in the garden being covered with hosepipe. Furthermore, generally there is only enough water pressure in a garden tap to power one hosepipe and sprinkler at a time.

A further problem that may occur with a garden sprinkler is forgetting to turn the water supply off resulting in the area becoming flooded. Not only will this damage the plants growing in the area being watered but it is extremely wasteful of water. If the supply of water is metered, it is also very costly.

It is an object of the present invention to provide an improved sprinkler system that aims to overcome, or at least alleviate, the abovementioned drawbacks.

According to a first aspect of the invention there is provided a water sprinkler having an inlet for receiving water, a sprinkler head for discharging water, an outlet for delivering water to a subsequent sprinkler and means for bypassing delivery of water to the sprinkler head in favour of the outlet after a predetermined period of time.

According to a second aspect of the invention there is provided a sprinkler system comprising a first sprinkler connected to a water supply pipe and a second or further sprinkler connectable in series to the first sprinkler, the system having means for selectively controlling discharge of water from each sprinkler.

According to a third aspect of the invention there is provided a diverter for a sprinkler system comprising two sprinklers, the diverter having an inlet for receiving water from a water supply pipe and at least two water outlets, one for each sprinkler, the diverter including means for selectively controlling discharge of water to each sprinkler.

In a preferred embodiment of the invention, a series of sprinklers are arranged to discharge water sequentially.

Preferably, each sprinkler comprises a water inlet, a sprinkler head and a water outlet and is adapted to be connectable in series to an adjacent sprinkler. Movement of each sprinkler head is caused by water passing from the inlet to the head, preferably via an internal pipe. In one preferred embodiment a predetermined amount of movement of each head activates, either directly or indirectly, a valve to divert water from that sprinkler head through the outlet to an adjacent sprinkler. In another preferred embodiment a timer is provided for activation of a valve to divert water from that sprinkler head through the outlet to an adjacent sprinkler.

It is to be appreciated that the final sprinkler in the series should be provided without an outlet or with a capped outlet to prevent the passage of water therethrough on activation of the valve.

The means for activating the valve following a predetermined amount of movement of the sprinkler head may be mechanical means that responds to movement of the sprinkler head, such as the rotation or oscillation of the head.

Each sprinkler head may be arranged to allow water discharge therethrough over a predetermined extent of axial rotation thereof. Preferably, on reaching said predetermined extent of rotation, the valve is activated. More preferably, the extent of rotation that causes activation of the valve is adjustable thereby enabling the duration of water discharge from a sprinkler head to be varied.

In a preferred embodiment of the present invention, the sprinkler head, or a part associated with the movement thereof, is provided with a cam that connects, preferably once on each complete revolution or full oscillation of the head, with a drive ratchet that causes rotation of a drive wheel. The drive wheel runs around the rim of a collar or ring that is provided with a recess or slot at a point around it circumference. When the drive wheel reaches the slot or recess it moves downwardly and, in doing so, effects movement of the valve to divert water from the sprinkler head to the outlet and to the next sprinkler in the series.

It is preferable for the drive wheel to be connected to the sprinkler head and the internal pipe that supplies water to the head whereby movement of the drive wheel also causes a corresponding movement in the head and internal pipe which pushes down on the valve to shut off water supply from the inlet to the internal pipe and opens up supply to the outlet. Preferably, a U-bend is provided that connects the inlet to the outlet.

Preferably, the starting position of the drive wheel relative to the slot of the collar is adjustable thereby enabling the duration of the supply of water to the sprinkler head to be varied. The greater the distance the drive wheel is from the slot, the longer the water is supplied to the head.

In the embodiment having a timer, the preferred timer measures an amount of water entering a chamber in the sprinkler. Preferably a passage from the inlet diverts water into a float chamber to raise a float that activates the valve on reaching a predetermined height in the float chamber. The passage preferably includes means for adjusting the rate at which water enters the float chamber, such as a screw, whereby the passage may be constricted.

The sprinkler head is preferably supplied via a tube which has a lower aperture normally open to the water inlet and the float is preferably arranged to move the tube, so that the aperture is closed to the water inlet when the float has reached the predetermined height in the float chamber.

Preferably the float chamber has a second inlet that is open to incoming water when the sprinkler head supply tube begins to move under action from the float.

The float chamber preferably has an outlet whereby water entering the float chamber is diverted to an adjacent sprinkler once the float chamber is filled.

The sprinkler of this preferred embodiment preferably has a valve for releasing water from the float valve. The valve is preferably operated by depression of the sprinkler head supply tube.

In yet another preferred embodiment of the invention a sprinkler includes a mechanism for diverting water from the sprinkler head to an outlet for supplying another sprinkler, wherein incoming water acts on a wheel or impeller to operate a valve to close access for water to the sprinkler head and open access for the water to the outlet after a predetermined time period.

In a yet further preferred embodiment of the invention a sprinkler includes a mechanism for diverting water from the sprinkler head to an outlet for supplying another sprinkler, wherein some incoming water is diverted to a hopper that is pivotable when containing a predetermined weight of water to operate a valve to close access for water to the sprinkler head and open access for the water to the outlet after a predetermined period of time.

Any number of sprinklers may be included in the sprinkler system of the present invention. The first sprinkler is connected to the mains water supply pipe and the second and further sprinklers are connected in series to each other by means of auxiliary pipes.

Preferably, each sprinkler is provided with a support base or spike for securing the sprinkler at a particular location.

Preferably, means is provided for de-activating the valve of each sprinkler after use thereby enabling water to be delivered to the sprinkler head when the system is next in use.

In the preferred embodiment, the sprinkler head of each sprinkler in the series is configured to allow manual or automatic raising of the head when the system is first set up for use. This causes the valve rod to be lifted to enable water to be delivered to the head via the internal pipe upon entry of water through the inlet of the sprinkler until the predetermined movement of the head has been achieved for each sprinkler.

For a better understanding of the present invention and to show more clearly how it may be carried into effect reference will now be made by way of example only to the accompanying drawings in which:
Figure 1 is a schematic diagram of a sprinkler system according to one embodiment of the present invention containing three sprinklers, with the first sprinkler being switched on;
Figure 2 is a cross-sectional diagram of an upper part of a single sprinkler for the system of Figure 1, the water supply to the sprinkler head being switched on;
Figure 3 is a perspective view of a slotted collar track used in the sprinkler of Figure 2;
Figure 4 is a cross-sectional diagram of the sprinkler shown in Figure 2, the water supply to the sprinkler head being switched off;
Figure 5 is a schematic diagram of a lower part of a single sprinkler for the system shown in Figure 1 showing the slide valve detail with the valve in the open position;
Figure 6 is a schematic diagram of a lower part of a single sprinkler for the system shown in Figure 1 showing the slide valve detail with the valve in the closed position;
Figure 7 is a cross-sectional diagram of a single sprinkler for the system shown in Figure 1;
Figure 8 shows another embodiment of the invention in its on position;
Figure 9 shows the embodiment of Figure 8 in its off position;
Figure 10 shows a further embodiment of the invention partly in section;
Figure 11 shows the embodiment of Figure 10 from one side;
Figure 12 shows the embodiment of Figure 10 at 90° to the view of Figure 11;
Figure 13 is a perspective view of the embodiment of Figure 10;
Figures 14A, B and C show the internal mechanism of the embodiment of Figure 10;
Figures 15A and B show detail of the valve mechanism of the embodiment of Figure 10;
Figure 16 is an exploded view of the embodiment of Figure 10 adapted as a diverter for a sprinkler system;
Figure 17 is an assembled view of the diverter of Figure 16;
Figure 18 is a perspective view of a yet further embodiment of the invention;
Figure 19 shows the embodiment of Figure 18 in use;
Figures 20 and 21 are further views of the embodiment of Figure 18; and
Figures 22A and B show the mechanism of the embodiment of Figure 18 in a first stage of operation;
Figure 23 shows the mechanism of Figure 18 in an intermediate stage of operation; and
Figures 24A and B show the mechanism of the embodiment of Figure 18 in a final stage of operation.

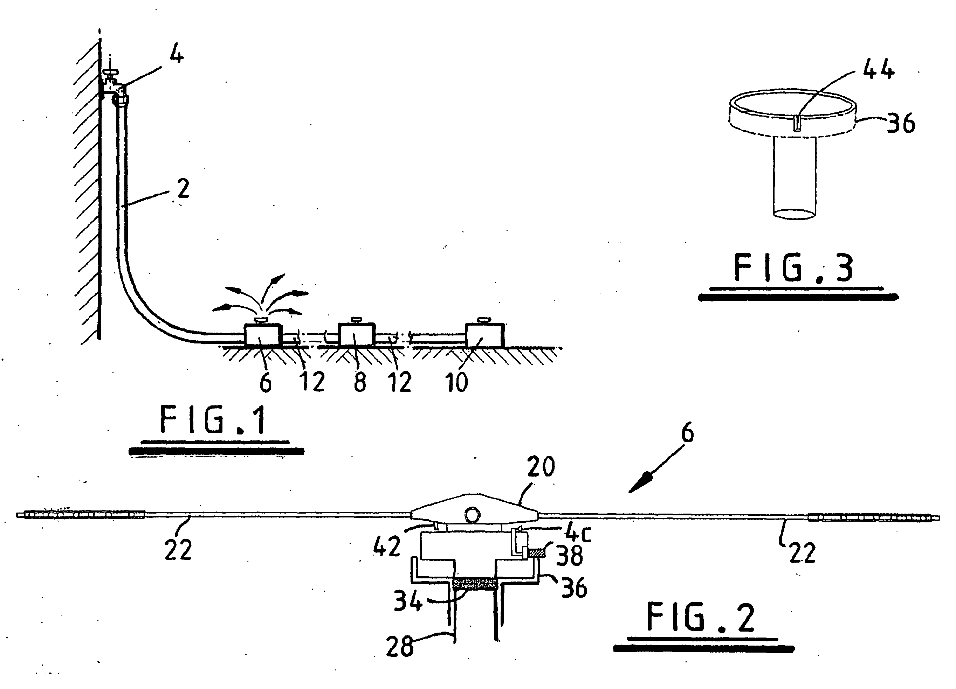

Referring to Figures 1 to 7 of the accompanying drawings, a sprinkler system according to one embodiment of the present invention is illustrated. The sprinkler system comprises a main hosepipe 2 connected to a mains water supply 4 and three sprinklers 6, 8, 10, the first being connected to the main hosepipe and the other two being connected in series to the first sprinkler by connecting pipes 12. In Figure 1, the first sprinkler 6 is switched on, with the other two 8,10 being switched off. Each sprinkler 6, 8, 10 comprises a rotating sprinkler head 20 with sprinkler arms 22 extending therefrom, a hose connector inlet 24 and hose connector outlet 26, an internal central water pipe 28 and valve rod 30, a U-bend 32, a gland seal 34, collar track 36 with drive wheel 38, a drive ratchet 40 and a drive cam 42. The sprinkler is supported on a base 50. The construction of the sprinklers is such as to enable water to be delivered successively to the first, second and then third sprinklers 6, 8, and 10 for a set period of time.

Whilst the sprinkler system illustrated has three sprinklers, it is to be appreciated that any number of sprinklers may be connected in series depending upon the size of the area to be watered.

The sprinkler system of the present invention operates by setting each sprinkler head to a raised position. In the raised position, a valve within the sprinkler is set in its open position allowing water that enters that sprinkler to be delivered to the sprinkler head via an internal central water pipe but prevents water being transported through the outlet of the sprinkler. Water enters the first sprinkler in the series and passes through the head to cause rotation thereof. After a predetermined number of rotations of the sprinkler head, the valve is shut to prevent water being supplied to the head and the water is diverted straight through the base of the sprinkler through the outlet to the next sprinkler in the series where the process is repeated until the water is delivered to the final sprinkler in the system.

The mechanism for effecting opening and shutting of the valve after a predetermined number of rotations of the sprinkler head will now be discussed in further detail. The drive cam 42 is provided on the underside of the revolving sprinkler head 20. When the mains water supply is first switched on, water is delivered to the head of the first sprinkler 6 via the connector inlet 24 and water pipe 28. As the power of the water forces the head to rotate, the cam 42 connects once on each complete revolution with the drive ratchet 40. This slowly rotates the drive wheel 38 that runs around the rim of the collar 36. The collar is provided with a slot 44 at one point around its circumference for receiving the drive wheel 38. In this manner, once the revolving head has rotated a predetermined amount of times to cause the drive wheel to rotate a distance from its start point to the position of the slot 44, the drive wheel falls in to the slot and causes the sprinkler head and internal water pipe to which it is connected to move downwardly also.

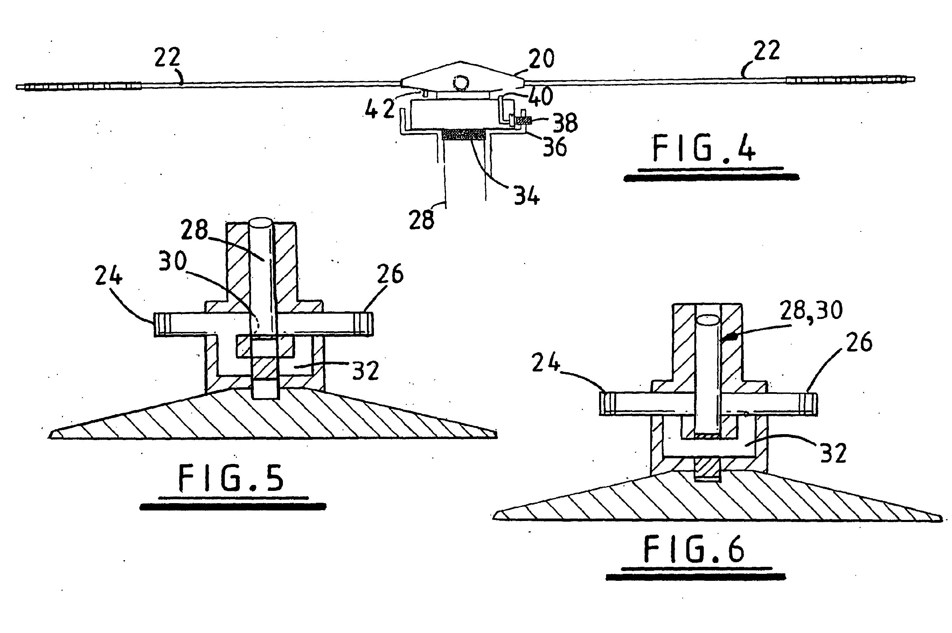

Movement of the sprinkler head and water pipe downwards activates a water diversion valve 30 (see Figures 5 and 6) to divert water that enters through the inlet pipe through the U-bend to the outlet. In this respect, when the sprinkler head is raised, the valve rod is also in a raised position and allows water to enter from the inlet pipe into the internal water pipe that supplies the sprinkler head but blocks the passage of water through the U-bend. In contrast, when the sprinkler head is lowered, the valve rod blocks the entry of the internal water pipe thereby shutting off the water supply to the sprinkler head but opens up the U-bend. In this manner, water from the inlet is diverted straight through the U-bend without being released through the sprinkler head and exits the sprinkler via the outlet. It then passes to the next sprinkler, which is connected to the outlet via an auxiliary pipe. The second sprinkler in the series has its drive ratchet set in the raised position so that water is initially delivered to the head of the sprinkler until the drive wheel reaches the slot in the collar whereupon the valve rod lowers to cut off supply to this sprinkler head and allow the water to be delivered to the next sprinkler in the series, via the outlet.

The final sprinkler 3 in the series has a stopper or blank (not shown) fitted to the outlet connector and closes the system down once its sprinkler head has rotated the predetermined number of times to cause lowering of the valve to shut off supply to the head.

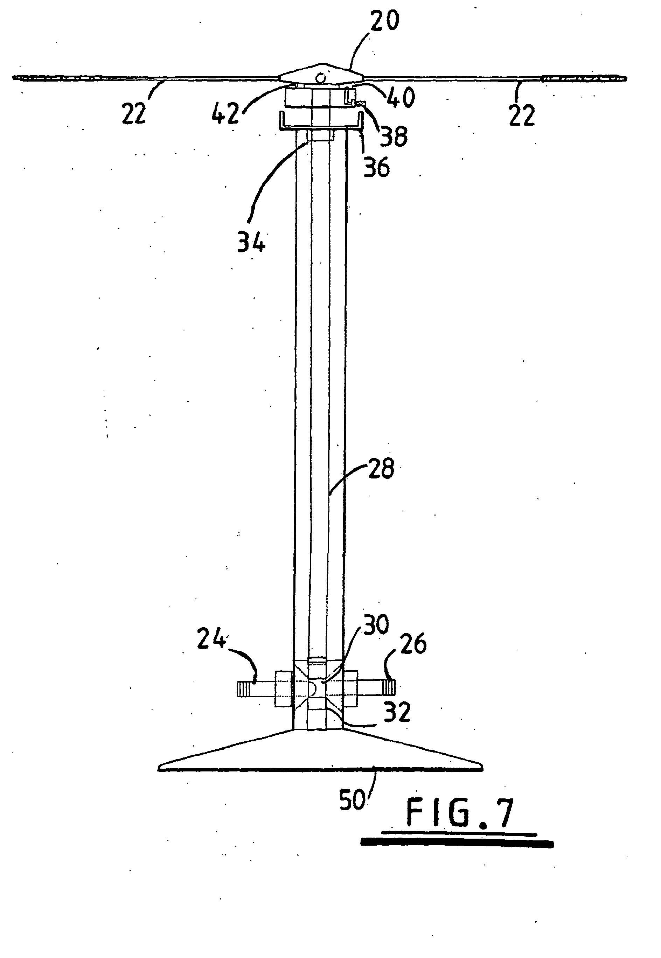

Each sprinkler is preferably provided with a base 50 for support and is at least knee-high, being provided with a long internal pipe 28, as illustrated in Figure 7. This makes it easier to set the sprinklers up in their raised position prior to switching on the system. However, it is to be appreciated that the sprinkler heads may be provided close to the ground, having only short internal pipes, if so desired.

The present invention enables a number of sprinklers to be set up across a garden and switched on one after the other. This removes the need to keep switching the water supply on and off to enable a sprinkler to be moved around the garden. Furthermore, as the sprinklers are switched on and off in succession, all the water is delivered to each sprinkler in turn thus maintaining the full water pressure whilst each is active. The system also requires less piping and can be set up cheaply and quickly. The final sprinkler in the system closes off supply to the garden thereby preventing flooding of the garden and wastage of water. The fact that the components parts of the sprinkler system are driven by the water itself removes the need for an electrical power source.

The period of time for which water is delivered to each sprinkler head is governed by the position of the drive wheel with respect to the slot in the collar. If the drive wheel is positioned as far away as possible from the slot in the collar, a maximum period of time is provided. In contrast, if the drive wheel is positioned close to the slot on the collar, the sprinkler will only be active for a relatively short period. The ability of the sprinkler system to provide varying watering durations increases the flexibility of the system.

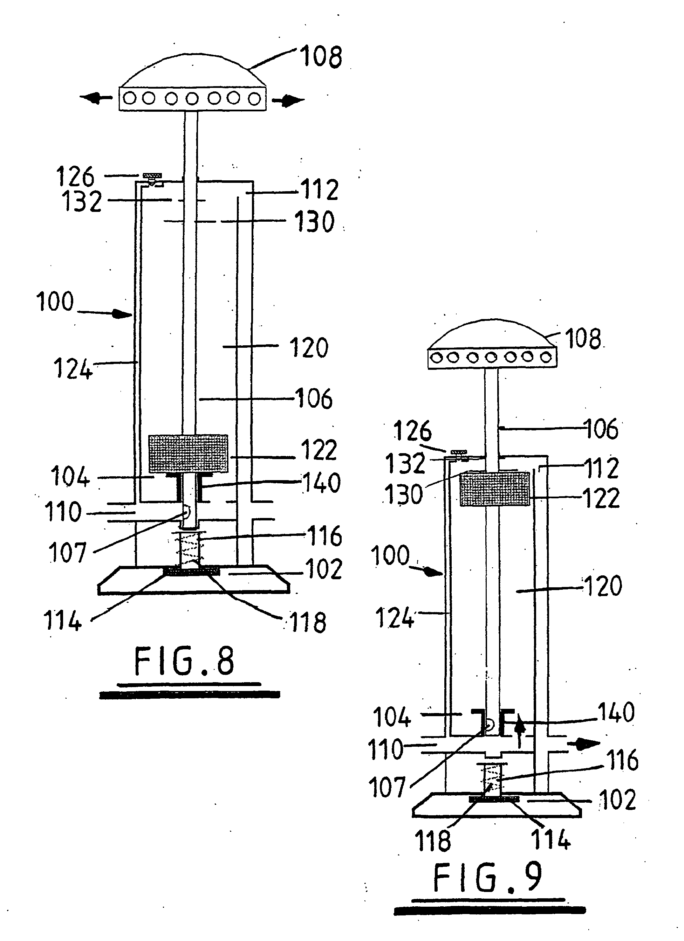

Turning to Figures 8 and 9 of the accompanying drawings, a garden sprinkler 100 for use in a system as shown in Figure 1 of the drawings comprises a base102 supporting a chamber 104. The chamber 104 has mounted through it a sprinkler head supply tube 106 on which is mounted a sprinkler head 108. The tube 106 has an inlet aperture 107 near its bottom end for water to be directed to the sprinkler head.

The chamber 104 has a water inlet passage 110 connectable to a water supply and a water outlet 112 connectable to an adjacent sprinkler. The water outlet 112 may be closed by a plug or the like when it is the last one in a series.

The tube 106 normally rests on a valve 114 in the base 102 of the sprinkler. The valve 114 is for discharging water from the sprinkler for resetting and is operated by depressing valve member 116 against the action of valve spring 118 by means of the sprinkler supply tube, so that the water escapes via the base of the sprinkler.

Within the chamber 104 is a float chamber 120 containing a float 122 on the supply tube 106 and arranged to rise as water enters the float chamber 120. For water to enter the float chamber 120, there is a tube 124 connected to the water inlet passage 110 and extending to the top of the float chamber. Near its exit at the top of the float chamber, the tube 124 has an adjustment screw 126 for adjusting the exit size to the float chamber to adjust the rate at which the float chamber fills with water to act as a timer.

The water outlet 112 has its entry near the top of the float chamber, so that water will only pass to an adjacent sprinkler once the float chamber is full. The sprinkler head supply tube has a pair of stops 130, 132 near its top. The first stop 130 is for the float 122. As water enters the float chamber 120, the float 122 will rise until it reaches the stop 130 when it will continue to rise but lift with it the supply tube 106, until the second stop 132 abuts the top of the float chamber.

When the float 122 starts to lift the supply tube 106, its aperture 107 moves into a collar 140 in the base of the float chamber to close the aperture. The lifting of the supply tube 106 also opens a second water inlet passage for the float chamber, which causes acceleration of the lifting of supply tube 106 and closing of its aperture 107, so that water now entering the float chamber can pass from its outlet 112 to an adjacent sprinkler (see Figure 9).

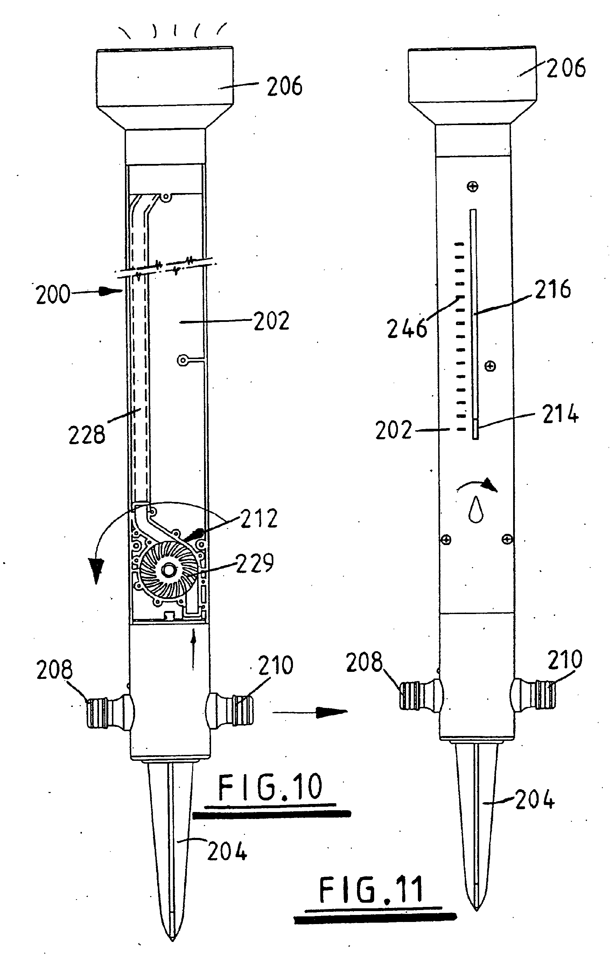

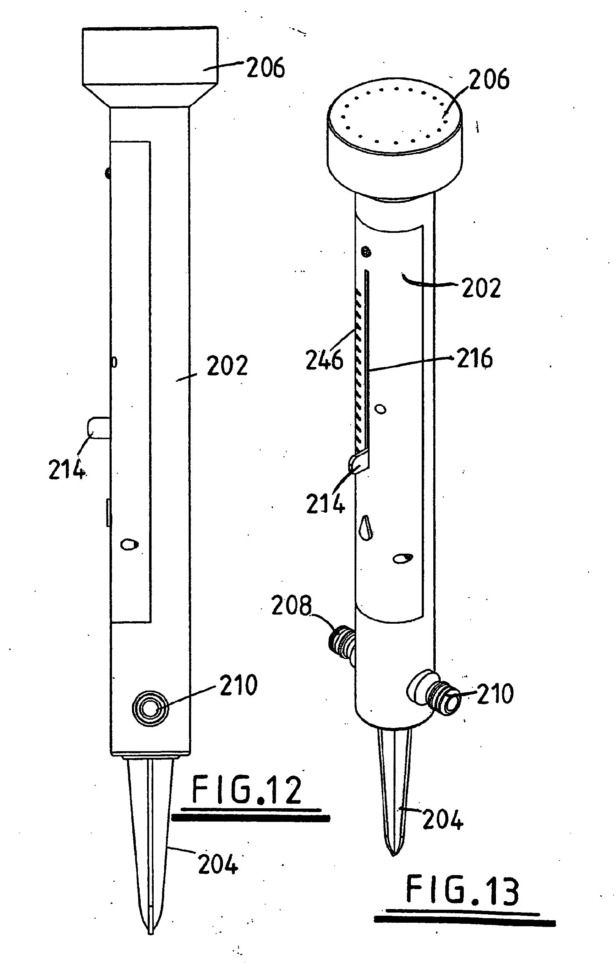

Turning to Figures 10 to 15, a sprinkler 200 comprises a tube 202 having at one end a spike 204 for inserting into the ground and at the opposite end a sprinkler head 206 for discharging water from the sprinkler. The tube 202 has a water inlet 208 and a water outlet 210. Water entering the inlet is fed to the sprinkler head via a mechanism 212 that will be described later but which includes valve means for diverting the water to the outlet 210 after a predetermined time period, so that the water from the outlet can be fed to the next sprinkler in sequence. A lever 214 in slot 216 along the tube 202 is used to set the time period.

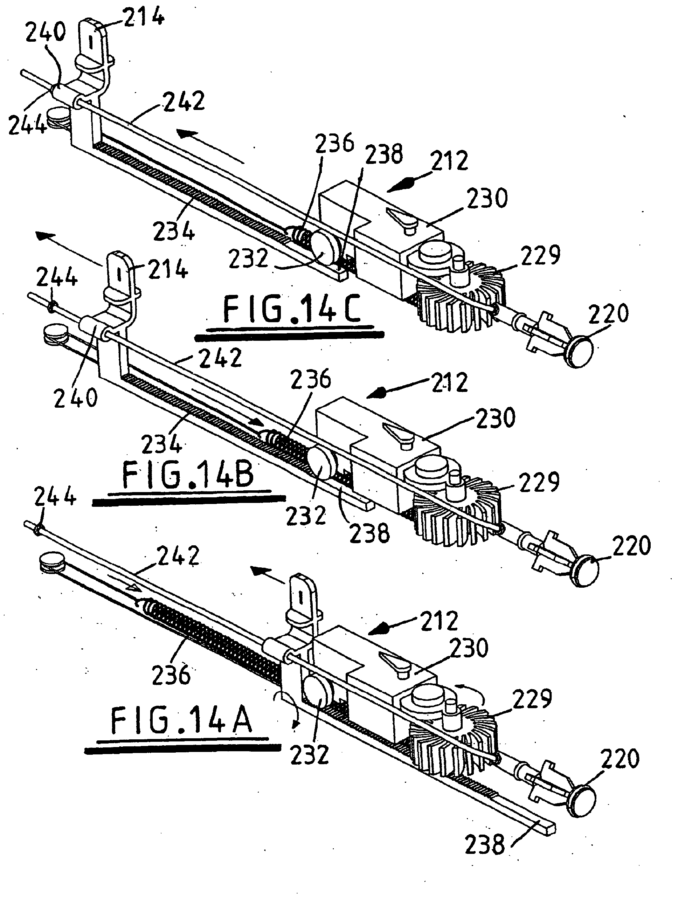

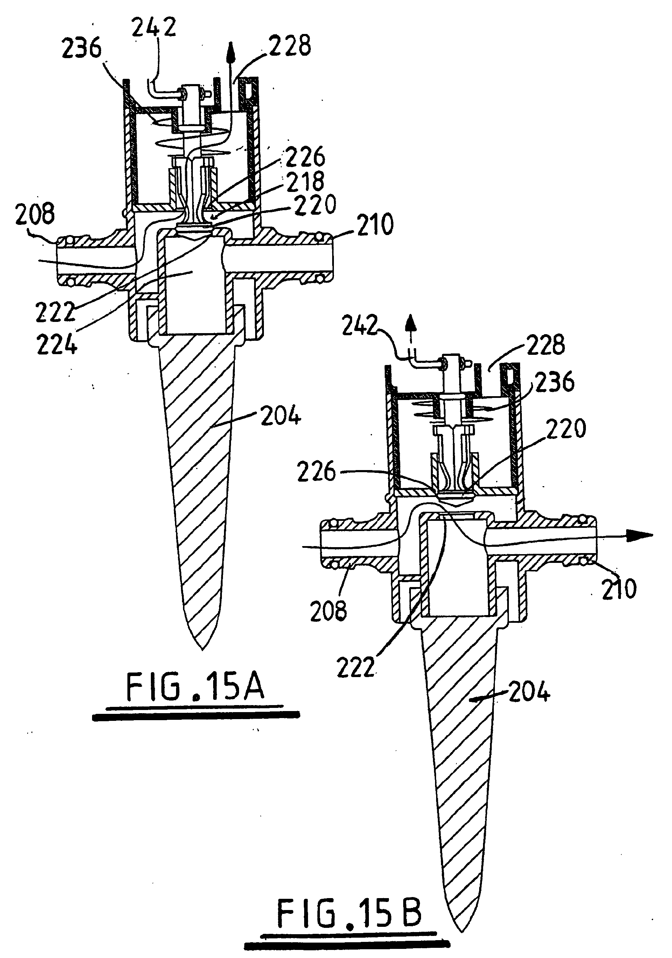

The mechanism 212 is shown in more detail in Figures 14A, B and C and 15A and B, in which there is a valve 218 between the inlet 208 and the outlet 210. Initially, valve member 220 seats in an entry 222 to chamber 224 prior to the outlet 210, so that water can flow through the inlet 208 into the tube 202 via entry 226 and then through pipe 228 to the sprinkler head. After a predetermined period of time the valve member closes the entry 226 and opens the entry 222 to the chamber for water to be fed to the outlet.

The mechanism 212 within the tube 202 for operating the valve has a water impeller 229 rotated by water entering the tube. Through a gear box 230 the impeller drives a gear 232 that acts on a track 234 at one end of which is the timing lever 214 to move the lever away from the gearbox. The track is spring loaded 236 to urge the lever away from the gearbox but while the gear is engaged with the track, movement of the track is controlled. At the end of the track there is a smooth section 238, where the gear cannot engage, at which point the lever is acted upon by the spring 236 to urge the lever further away from the gearbox. The lever 214 has a bore 240 through which passes a wire 242 connected to the valve member 220 and which has at its other end a stop 242. When the lever is moved by the spring the lever impacts on the stop 244 to pull the wire and hence move the valve member 220 to close the entry 226 to the tube and open access to the outlet 210.

The timing lever 214 can be set at any position along the slot, which has timing markings 246 alongside.

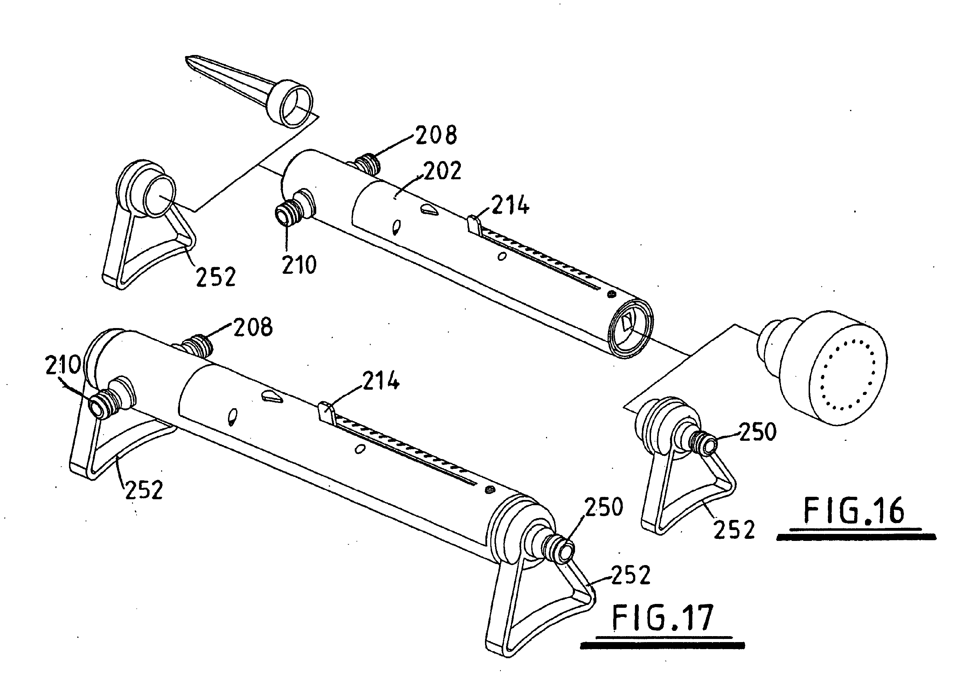

Figures 16 and 17 of the drawings show how the sprinkler of Figure 10 can be converted for use as a diverter between sprinklers. The sprinkler head is replaced by an outlet nozzle 250 for connection of piping to a first sprinkler, whilst the first outlet is connected to another sprinkler. The diverter has a triangular stand 252 at each end.

The diverter operates in the same way as described above to direct water initially to the first sprinkler and then upon movement of the valve member to the second sprinkler. Thus, the diverter can be used with conventional sprinklers.

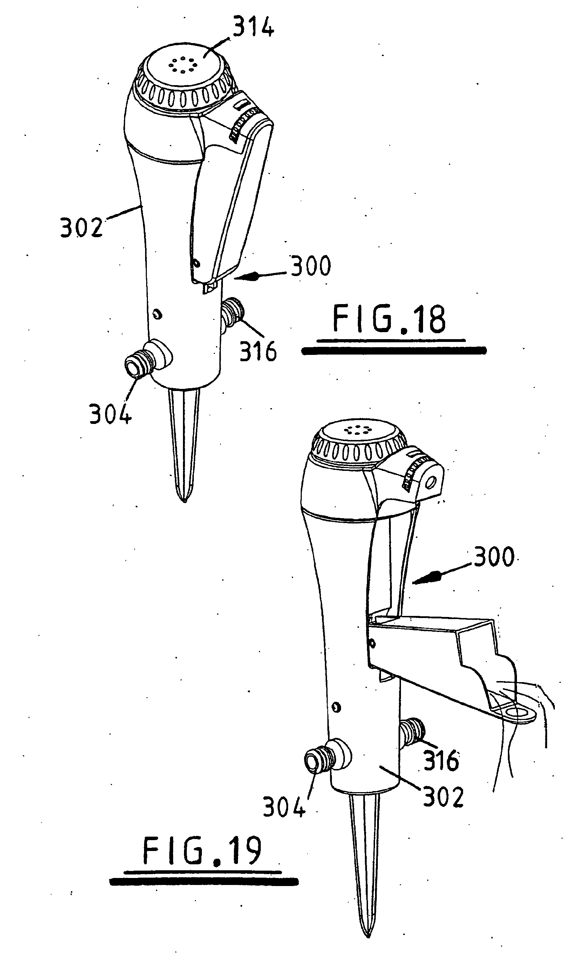

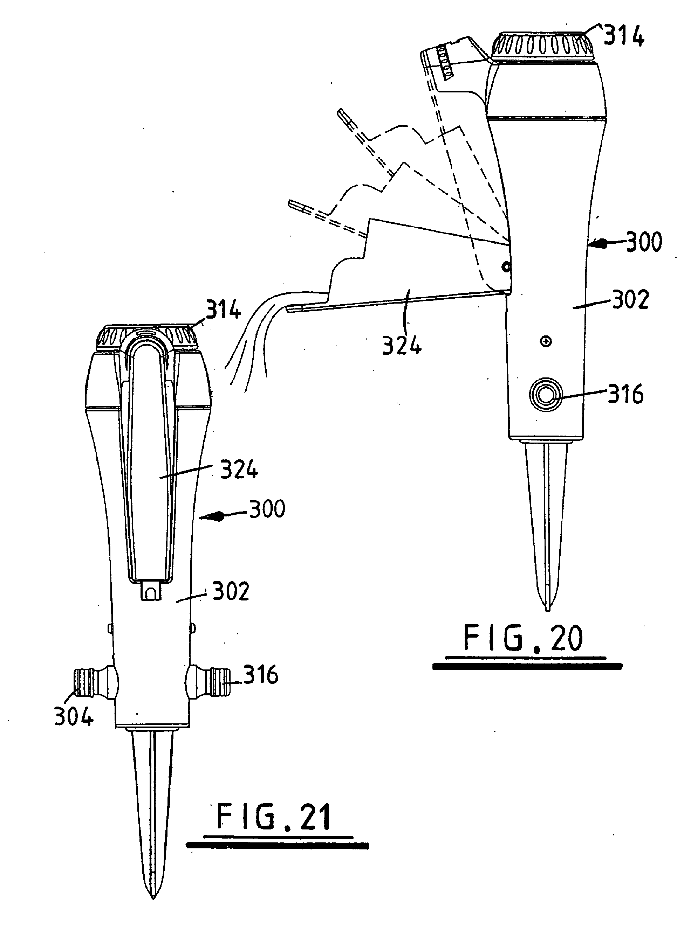

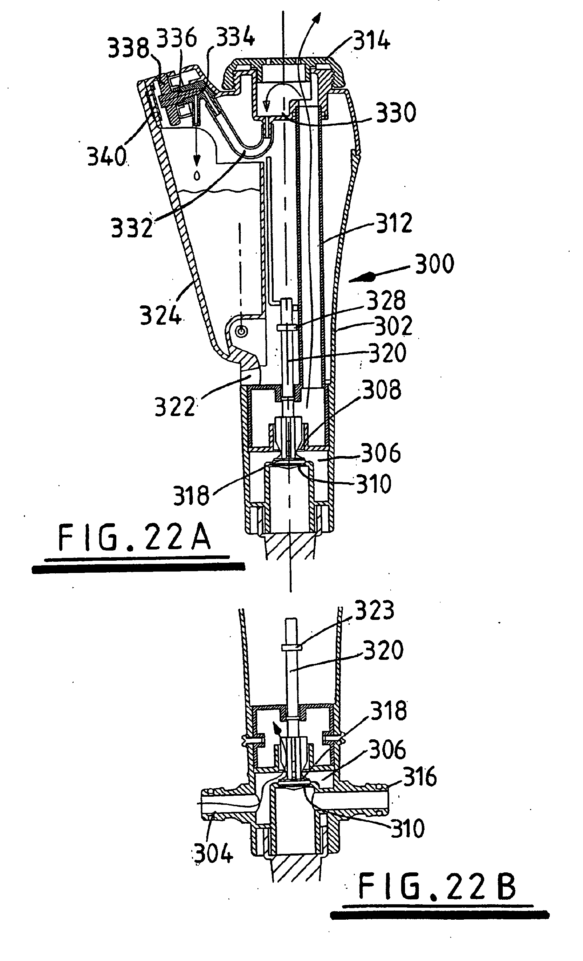

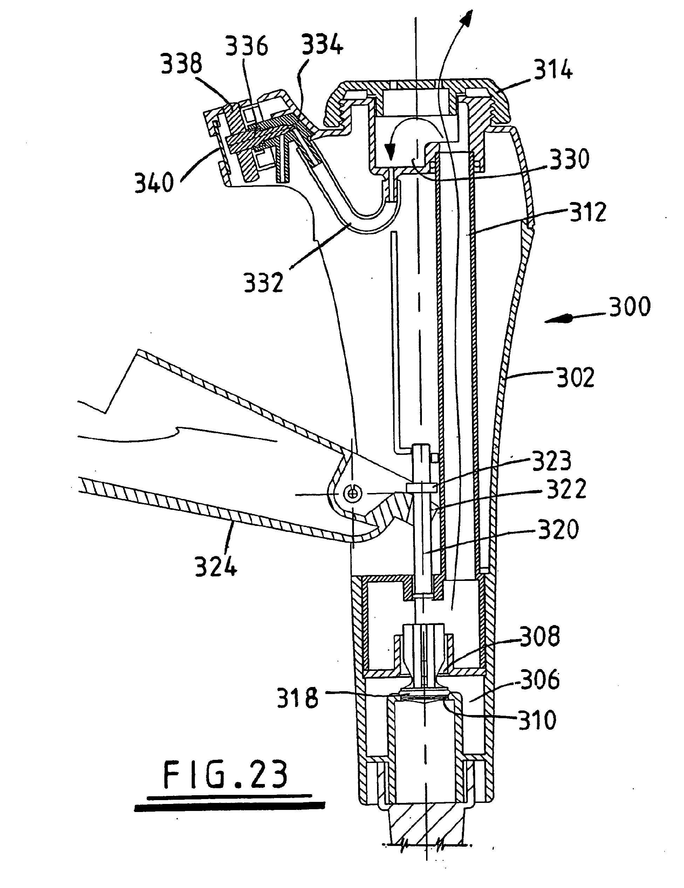

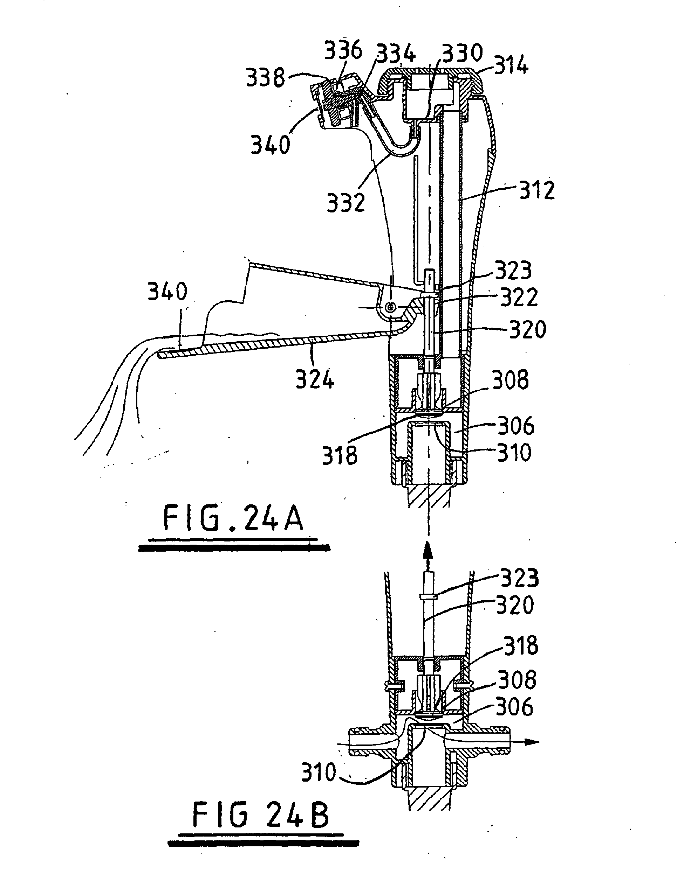

Finally in Figures 18 to 24, a sprinkler 300 is described that has a different mechanism for diverting water flow to a subsequent sprinkler. The sprinkler 300 has body 302 with an inlet 304 for receiving water into a chamber 306, which has two openings 308 and 310. The first opening 308 is connected by a tube 312 to sprinkler head 314. The second opening 310 leads to an outlet 316 for connection to piping to deliver water to another sprinkler. The chamber 306 includes a valve member 318 for selectively sealing opening 308 or opening 310.

Initially the valve member will seal opening 310, so that water delivered to the sprinkler through its inlet 304 will be discharged by the sprinkler head 314. The valve member 318 has a stem 320 that can be acted upon by a projection 322 from the end of a hopper 324 that is pivotally mounted to the body 302. The hopper is arranged to receive drop wise overflow water delivered to the sprinkler head, so that when the a predetermined amount of water is in the hopper it tips over, so that the projection 322 acts on an abutment 323 on the valve stem to move the valve member from sealing the opening 310 to sealing the opening 308, so that no more water is discharged from the sprinkler head. Then water entering the inlet 304 passes through to the outlet 316 for delivery to the next sprinkler in sequence.

To control the operation of the hopper alongside the top of the tube 312 is a basin 330 that receives overflow water, which leaves the base of the basin via a tube 332 and is delivered through a size variable orifice 334 to the hopper. The size of the orifice 334 is varied by means of a screw 336 rotatable by means of a knob 338 that can be rotated to move the crew into or out of the orifice to vary the rate at which water can pass through into the hopper. The knob has associated gradation markings to enable selection of the period of time over which the hopper is to fill before tipping over. The hopper and the body have magnetic means 340 for holding the hopper in place until the weight of water in the hopper becomes sufficient to overcome the magnetic attraction and allows the hopper to tip over.

## Claims

1. A water sprinkler having an inlet for receiving water, a sprinkler head for discharging water, an outlet for delivering water to a subsequent sprinkler and means for bypassing delivery of water to the sprinkler head in favour of the outlet after a predetermined period of time.

2. A water sprinkler as claimed in claim 1, wherein each sprinkler is adapted to be connectable in series to an adjacent sprinkler.

3. A water sprinkler as claimed in claim 1 or 2, wherein movement of the sprinkler head is caused by water passing from the inlet to the head.

4. A water sprinkler as claimed in claim 3, wherein a predetermined amount of movement of each head activates, either directly or indirectly, a valve to divert water from that sprinkler head through the outlet to an adjacent sprinkler.

5. A water sprinkler as claimed in claim 1, 2 or 3, wherein a timer is provided for activation of a valve to divert water from that sprinkler head through the outlet to an adjacent sprinkler.

6. A water sprinkler as claimed in claim 3 or 4, wherein the means for activating the valve following a predetermined amount of movement of the sprinkler head is mechanical means that responds to movement of the sprinkler head.

7. A water sprinkler as claimed in claim 6, wherein said movement is rotation or oscillation of the head.

8. A water sprinkler as claimed in claim 7, wherein the sprinkler head is arranged to allow water discharge therethrough over a predetermined extent of axial rotation thereof and on reaching said predetermined extent of rotation, the valve is activated.

9. A water sprinkler as claimed in claim 8, wherein the extent of rotation that causes activation of the valve is adjustable thereby enabling the duration of water discharge from a sprinkler head to be varied.

10. A water sprinkler as claimed in claim 1 or 2, wherein the sprinkler head, or a part associated with the movement thereof, is provided with a cam that connects with a drive ratchet that causes rotation of a drive wheel, the drive wheel runs around the rim of a collar or ring that is provided with a recess or slot at a point around it circumference, whereby when the drive wheel reaches the slot or recess it moves downwardly and, in doing so, effects movement of the valve to divert water from the sprinkler head to the outlet and to the next sprinkler in the series.

11. A water sprinkler as claimed in claim 10, wherein said connection occurs once on each complete revolution or full oscillation of the head,

12. A water sprinkler as claimed in claim 11, wherein the drive wheel is connected to the sprinkler head and the internal pipe that supplies water to the head, whereby movement of the drive wheel also causes a corresponding movement in the head and internal pipe which pushes down on the valve to shut off water supply from the inlet to the internal pipe and opens up supply to the outlet.

13. A water sprinkler as claimed in claim 12, wherein a U-bend is provided that connects the inlet to the outlet.

14. A water sprinkler as claimed in any one of claims 10 to 13, wherein the starting position of the drive wheel relative to the slot of the collar is adjustable thereby enabling the duration of the supply of water to the sprinkler head to be varied.

15. A water sprinkler as claimed in claim 5, wherein the timer measures an amount of water entering a chamber in the sprinkler.

16. A water sprinkler as claimed in claim 15, wherein a passage from the inlet diverts water into a float chamber to raise a float that activates the valve on reaching a predetermined height in the float chamber

17. A water sprinkler as claimed in claim 16, wherein the passage includes means for adjusting the rate at which water enters the float chamber, whereby the passage may be constricted.

18. A water sprinkler as claimed in claim 17, wherein the adjusting means is a screw.

19. A water sprinkler as claimed in claim 16, 17 or 18, wherein the sprinkler head is supplied via a tube, which has a lower aperture normally open to the water inlet.

20. A water sprinkler as claimed in claim 19, wherein the float is arranged to move the tube, so that the aperture is closed to the water inlet when the float has reached the predetermined height in the float chamber.

21. A water sprinkler as claimed in claim 20, wherein the float chamber has a second inlet that is open to incoming water when the sprinkler head supply tube begins to move under action from the float.

22. A water sprinkler as claimed in claim 21, wherein the float chamber has an outlet whereby water entering the float chamber is diverted to an adjacent sprinkler once the float chamber is filled.

23. A water sprinkler as claimed in any one of claims 16 to 22, wherein the sprinkler has a valve for releasing water from the float valve.

24. A water sprinkler as claimed in claim 23, wherein release valve is operated by depression of the sprinkler head supply tube.

25. A water sprinkler as claimed in claim 1 or 2 including a mechanism for diverting water from the sprinkler head to an outlet for supplying another sprinkler, wherein incoming water acts on a wheel or impeller to operate a valve to close access for water to the sprinkler head and open access for the water to the outlet after a predetermined time period.

26. A water sprinkler as claimed in claim 1 or 2 including a mechanism for diverting water from the sprinkler head to an outlet for supplying another sprinkler, wherein some incoming water is diverted to a hopper that is pivotable when containing a predetermined weight of water to operate a valve to close access for water to the sprinkler head and open access for the water to the outlet after a predetermined period of time.

27. A water sprinkler as claimed in any one of claims 1 to 26 having a support base or spike for securing the sprinkler at a particular location.

28. A water sprinkler as claimed in any one of claims 1 to 27 having means for de-activating the valve of each sprinkler after use thereby enabling water to be delivered to the sprinkler head when the system is next in use.

29. A water sprinkler as claimed in any one of claims 1 to 28, wherein the sprinkler head is configured to allow manual or automatic raising of the head when the sprinkler forms part of a system and the system is first set up for use.

30. A diverter for a sprinkler system comprising two sprinklers, the diverter having an inlet for receiving water from a water supply pipe and at least two water outlets, one for each sprinkler, the diverter including means for selectively controlling discharge of water to each sprinkler.

31. A sprinkler system comprising a first sprinkler connected to a water supply pipe and a second or further sprinkler connectable in series to the first sprinkler, the system having means for selectively controlling discharge of water from each sprinkler.

32. A system as claimed in claim 31 comprising a series of sprinklers are arranged to discharge water sequentially.

33. A system as claimed in claim 31 or 32, wherein at least the first sprinkler is a sprinkler as claimed in any one of claims1 to 29.

34. A sprinkler system as claimed in claim 31 or 32, wherein the means for selectively controlling discharge of water from each sprinkler includes a diverter as claimed in claim 30.
